(19) Europäisches Patentamt
European Patent Office
Office européen des brevets

(11) **EP 1 526 048 B1**

(12) **EUROPÄISCHE PATENTSCHRIFT**

(45) Veröffentlichungstag und Bekanntmachung des Hinweises auf die Patenterteilung:
**23.01.2008   Patentblatt 2008/04**

(51) Int Cl.:
*B60S 1/08* (2006.01)      *G01N 21/45* (2006.01)

(21) Anmeldenummer: **04021524.6**

(22) Anmeldetag: **10.09.2004**

(54) **Messeinheit für einen Feuchtigkeitssensor zur Detektion von Feuchtigkeit auf einer Oberfläche, ein Regensensor und ein Verfahren zur Detektion von Feuchtigkeit**

Measuring unit for a humidity sensor for detecting humidity on a surface, rain sensor and method to detect humidity

Unité de mesure pour un capteur d'humidité permettant de détecter l'humidité sur une surface, capteur de pluie et méthode de détection d'humidité

(84) Benannte Vertragsstaaten:
**DE FR GB SE**

(30) Priorität: **21.10.2003   DE 10348772**

(43) Veröffentlichungstag der Anmeldung:
**27.04.2005   Patentblatt 2005/17**

(73) Patentinhaber: **ROBERT BOSCH GMBH
70442 Stuttgart (DE)**

(72) Erfinder:
• **Bochat, Ralf
  76275 Ettlingen (DE)**
• **Glohr, Francis
  67500 Haguenau (FR)**
• **Merkel, Klaus
  76596 Forbach (DE)**

(56) Entgegenhaltungen:
**WO-A-98/55347            DE-C1- 19 603 553**

**Beschreibung**

Die Erfindung betrifft eine Messeinheit zum Detektieren von Feuchtigkeit auf einer Oberfläche, insbesondere von Regentropfen und einen Regensensor. Die Erfindung betrifft weiterhin ein Verfahren zum Detektieren von Feuchtigkeit auf einer Oberfläche, insbesondere einen Regensensor zum Detektieren von Regentropfen auf einer Oberfläche.

Feuchtigkeitssensoren werden z. B. in Kraftfahrzeugen an einer der Außenumgebung zugewandten Oberfläche, insbesondere der Windschutzscheibe, angebracht, um darauf befindliche Tröpfchen zu detektieren und dadurch das Vorhandensein von Regen zu erkennen. Dies dient dazu, abhängig von dem detektierten Maß an Feuchtigkeit eine Scheibenwischanlage automatisch zu betreiben, um eine klare Sicht für den Fahrer sicherzustellen. Dazu ist eine Strahlungssendeeinrichtung und eine Strahlungsempfangseinrichtung vorgesehen, wobei die von der Strahlungssendeeinrichtung emittierte Strahlung in die Windschutzscheibe eingekoppelt wird und an der äußeren Oberfläche der Windschutzscheibe reflektiert wird, so dass die emittierte Strahlung nach ihrer Reflektion auf die Strahlungsempfangseinrichtung fallen kann. Befinden sich an der Reflektionsstelle Tröpfchen oder ist die Reflektionsstelle beschlagen, so wird ein Anteil der emittierten Strahlung an der Oberfläche nicht reflektiert, sondern an die Umgebung abgegeben. Dadurch verringert sich der Anteil der Strahlung, der in Richtung der Strahlungsempfangseinrichtung reflektiert wird, wodurch das Maß an Feuchtigkeit über den Anteil der reflektierten emittierten Strahlung bestimmt werden kann. zur Detektion des Maßes an Feuchtigkeit auf der Windschutzscheibe wird der in der Strahlungsempfangseinrichtung empfangene, an der Oberfläche der Windschutzscheibe reflektierte Anteil der emittierten Strahlung in einer Messeinheit ausgewertet und ein Messwert generiert.

Die Strahlungsempfangseinrichtung ist häufig als Fotodiode ausgeführt, die mit einem Kondensator verschaltet ist, um den Strom, der durch die Fotodiode fließt, zu bestimmen. Der Kondensator wird dabei eine vordefinierte Zeit aufgeladen, wobei anschließend die Ladespannung am Kondensator gemessen wird. Diese Spannung ist dabei proportional zur empfangenen Strahlungsmenge, die auf die Strahlungsempfangseinrichtung fällt. Aus der gemessenen Spannung kann der zu messende Strom berechnet werden.

Solche Messeinheiten für Regensensoren, insbesondere für den Einsatz in Kraftfahrzeugen, müssen so gestaltet sein, dass sie in verschiedene Typen von Kraftfahrzeugen eingesetzt werden können und mit verschiedenen Strahlungssendeeinrichtungen unterschiedlicher Strahlungsstärken bzw. Wellenlängen zusammenarbeiten können. Durch die unterschiedlichen Orte der Anordnung auf der Windschutzscheibe sowie aufgrund der unterschiedlichen optischen Parameter der Windschutzscheibe muss nach dem Anbringen des Feuchtigkeitssensors üblicherweise eine Vormessung zur Messbereichsbestimmung durchgeführt werden, um den Feuchtigkeitssensor nach seinem Einbau zu kalibrieren. Je nach Kalibrationseinstellung ist jedoch die Auflösung des Feuchtigkeitssensors unterschiedlich, da es bei der Bestimmung des Maßes an Feuchtigkeit auf der Windschutzscheibe auf die prozentualen Änderungen des reflektierten Anteils der emittierten Strahlung ankommt.

Aus WO 98/55347 ist eine Vorrichtung zum Erfassen einer Benetzung einer Scheibe bekannt. Die Vorrichtung weist einen Regensensor auf, der eine Messschaltung mit einem lichtabstrahlenden Sender und einen auf das abgestrahlte Licht ansprechenden, ein Sensorsignal abgebenden Empfänger aufweist. Weiterhin ist eine Auswerteeinrichtung für das Sensorsignal vorgesehen, wobei die Messschaltung eine Integrationsstufe zum Erfassen der Lichtmenge des auf den Empfänger fallenden Lichts und eine Komparatorstufe aufweist. Die Komparatorstufe ist ausgebildet, um ein Auslösesignal an die Auswerteschaltung abzugeben, wenn die ab einen bestimmten Zeitpunkt integrierte Lichtmenge eine Schwelle überschreitet. Die aus dem Licht des Senders und der eventuellen Fremdlicht bestehenden Gesamtlichtmenge und die bei abgeschalteten Sender erfasste Fremdlichtmenge werden in gesonderten konstanten Zeitintervallen gemessen. Das zur Messung der Fremdlichtmenge herangezogene Zeitintervall für eine Tag-Nacht-Erkennung ist nach einer vorgebbaren Anzahl von Messzyklen oder nach einer vorgebbaren Zeitdauer zu verlängern und/oder die Schwelle zu erniedrigen. Die Messschaltung weist einen Kondensator auf, der mit einem von dem Anteil der reflektierten Strahlung abhängigen Messstrom aufladbar ist. Der Kondensator wird während einer Ladezeit auf ein Messpotential aufgeladen. Die Ladezeit hängt von der Höhe des Messstromes ab, wobei der Messwert abhängig von der Ladespannung des Kondensators ist.

Aus DE 19603553 C1 ist eine Vorrichtung zum Betreiben eines Scheibenwischers bekannt. Die Vorrichtung weist eine automatische Wischersteuerung auf, die einen Regensensor mit einem lichtabstrahlenden Sender und einen auf das abgestrahlte Licht ansprechenden, ein Sensorsignal abgebenden Empfänger sowie eine einen Mikrorechner umfassende Auswerteeinrichtung für das Sensorsignal aufweist. Die Auswerteeinrichtung weist einen außerhalb des Mikrorechners vorgesehenen Kondensator auf, dem das Sensorsignal zugeführt wird, wobei an den Kondensator ein Komparator angeschlossen ist. Der Komparator vergleicht die an den Kondensator durch das Sensorsignal aufgebaute Spannung mit einer Schwellenspannung. Bei Überschreiten der Schwellenspannung gibt der Komparator ein Ausgangssignal ab. Der Mikrorechner bildet aus dem Ausgangssignal einen einer Zeit der Schwellenüberschreitung entsprechenden Messwert.

Es ist Aufgabe der vorliegenden Erfindung eine Messeinheit und einen Feuchtigkeitssensor zu schaffen, wobei nach dem Einbau eine Kalibrierung nicht notwendig ist und dessen Messauflösung gegenüber herkömmlichen Feuchtigkeitssensoren verbessert ist. Es ist weiterhin eine Aufgabe der vorliegenden Erfindung ein Verfahren zum Messen des Maßes an Feuchtigkeit zur Verfügung zu stellen, mit dem ohne Kalibration eine hohe Messauflösung erreicht wird.

Diese Aufgabe wird durch die Messeinheit nach Anspruch 1 sowie durch den Feuchtigkeitssensor nach Anspruch 6 bzw. durch das Verfahren nach Anspruch 8 gelöst.

Weitere vorteilhafte Ausgestaltungen der Erfindung sind in den abhängigen Ansprüchen angegeben.

Gemäß einem ersten Aspekt der vorliegenden Erfindung ist eine Messeinheit zum Detektieren von Feuchtigkeit auf einer Oberfläche mit Hilfe eines Messwertes vorgesehen. Die Messeinheit weist eine Strahlungsempfangseinrichtung auf, um eine von dem Maß an Feuchtigkeit auf der Oberfläche abhängige reflektierte Strahlung zu empfangen. Eine Messvorrichtung ist mit der Strahlungsempfangseinrichtung verbunden und weist einen Kondensator auf, der mit einem von dem Anteil der Reflektierten Strahlung abhängigen Messstrom aufladbar ist. Die Messvorrichtung weist weiterhin eine Messsteuereinheit auf, um den Kondensator auf ein Messpotential während einer Ladezeit aufzuladen. Die Ladezeit hängt von der Höhe des Messstroms ab, wobei der Messwert abhängig von der Ladespannung des Kondensators ist.

Erfindungsgemäß entspricht die Ladezeit der Summe einer ersten Aufladezeit, in der der Messstrom den Kondensator auf ein vorgegebenes Bezugspotential auflädt und einer zweiten Aufladezeit, wobei die zweite Aufladezeit abhängig von der ersten Aufladezeit ist. Die Differenz zwischen dem Messpotential und dem vorgegebenen Bezugspotential ist als Messwert ausgebbar.

Die Messeinheit gemäß der vorliegenden Erfindung hat den Vorteil, dass sie nach seinem Einbau, z. B. in einen Feuchtigkeitssensor für ein Kraftfahrzeug nicht kalibriert werden muss, z. B. indem die Strahlungsstärke der verwendeten Strahlungssendeeinrichtung angepasst wird. Es werden daher zwei Messungen durchgeführt. Die erste Messung mit erster Ladezeit am Kondensator dient dazu, die ungefähre Lichtintensität festzustellen, woraus eine zweite Aufladezeit berechnet wird, während der bei der zweiten Messung der Kondensator mit dem zur Verfügung stehenden Messstrom aufgeladen wird. Dadurch, dass die zweite Aufladezeit abhängig von der während des ersten Messvorgangs festgestellten ersten Aufladezeit gewählt wird, kann sicher gestellt werden, dass unabhängig von der von der Strahlungsempfangseinheit, d. h. der Fotodiode, gelieferte Messstrom die Ladung des Kondensators den Messbereich des den Messwert auswertenden Messgerätes nicht verlässt. Weiterhin wird durch die von der Stärke des Messstroms abhängige Einstellung der zweiten Aufladezeit erreicht, dass der Messbereich des auswertenden Messgerätes möglichst in einem weiten Bereich genutzt wird. Somit können eine Vielzahl verschiedener Strahlungssendeeinrichtungen vorgesehen werden, die mit der Messeinheit in einer Weise zusammenarbeiten, dass eine möglichst präzise Messung des Maßes an Feuchtigkeit auf der Oberfläche vorgenommen werden kann.

Vorzugsweise ist die Messvorrichtung so gestaltet, um nach dem Aufladen während der Ladezeit den Kondensator auf ein vorgegebenes Anfangspotential zu entladen. Dabei ist vorgesehen, das Messen des Maßes an Feuchtigkeit auf der Oberfläche zyklisch durchzuführen. Es dient weiterhin dazu, zum Bestimmen der ersten Aufladezeit den Kondensator auf einen Ausgangszustand, d. h. auf ein vorgegebenes Anfangspotential, zurückzuführen, um einen Bezugspunkt für die Messung der ersten Aufladezeit zu definieren.

Vorzugsweise weist die Messvorrichtung einen Messwertverstärker auf, um den Messwert um einen vorgegebenen Faktor zu verstärken. Dies ermöglicht es, den erhaltenen Messwert so zu verstärken, dass der Messbereich des am Ausgang des Messwertverstärkers anzuschließendes Messgerätes möglichst vollständig oder zu einem großen Teil verwendet wird.

Die Messvorrichtung weist vorzugsweise eine Vergleichereinrichtung und eine Steuereinheit auf, um den Ladevorgang zu starten und gemäß der Ladezeit zu beenden. Die Ladezeit wird abhängig von einem von der Vergleichereinrichtung generierten Vergleichssignal bestimmt, wobei das Vergleichssignal das Ende der ersten Aufladezeit angibt.

Vorzugsweise liegt das vorgegebene Bezugspotential zwischen 50% und 90%, insbesondere bei 75% eines Versorgungspotentials. Dabei ist Wesentlich, dass das vorgegebene Bezugspotential so gewählt ist, dass die von der ersten Aufladezeit abhängige zweite Aufladezeit nicht dazu führt, dass die in dem Kondensator gespeicherte Ladespannung nicht zu nahe an die Versorgungsspannung herankommt, so dass der Ladestrom nicht aufgrund der an der Strahlungsempfangseinrichtung anliegenden zu geringen Spannungsdifferenz reduziert wird.

Gemäß einem weiteren Aspekt der vorliegenden Erfindung ist ein Feuchtigkeitssensor mit einer solchen Messeinheit vorgesehen. Der Feuchtigkeitssensor weist weiterhin eine Strahlungssendeeinrichtung auf, um eine Strahlung auf die Oberfläche, z. B. der Windschutzscheibe zu emitieren. Die Strahlungssendeeinrichtung und die Strahlungsempfangseinrichtung der Messeinheit bilden einen Feuchtigkeitssensor, wobei der Anteil der an der Oberfläche der Windschutzscheibe reflektierten Strahlung das Maß der Feuchtigkeit auf der Oberfläche angibt.

Gemäß einem weiteren Aspekt der vorliegenden Erfindung ist ein Verfahren zum Messen des Maßes an Feuchtigkeit auf einer Oberfläche und zum Ausgeben eines Messwertes vorgesehen. Eine Strahlung wird auf einer Oberfläche emitiert, wobei ein von dem Maß an Feuchtigkeit auf der Oberfläche abhängiger Anteil der an der Oberfläche reflektierten Strahlung empfangen wird.

Ein Kondensator wird mit einem von dem Anteil der reflektierten Strahlung abhängigen Messstrom während einer Ladezeit aufgeladen. Die Ladezeit hängt von der Höhe des Messstroms ab, wobei der Messwert abhängig von der Ladespannung des Kondensators ist.

Erfindungsgemäß ist die Ladezeit die Summe einer ersten Aufladezeit, in der der Messstrom den Kondensator auf ein vorgegebenes Bezugspotential auflädt und einer zweiten Aufladezeit, die abhängig von der ersten Aufladezeit ist. Die Differenz zwischen dem Messpotential und dem vorgegebenen Bezugspotential wird als den Messwert ausgegeben.

Das erfindungsgemäße Verfahren ermöglicht es, dass das Maß an Feuchtigkeit auf der Oberfläch genau und ohne vorherige Kalibrierung bestimmt werden kann, da der Messbereich durch das automatische Anpassen der zweiten Aufladezeit an die Aufladegeschwindigkeit des Kondensators auf ein vorgegebenes Bezugspotential angepasst ist. Somit kann ohne ein manuelles Einstellen der Aufladezeit des Kondensators bei einem Kalibriervorgang automatisch ein Messbereich gewählt werden, bei dem die Messvorrichtung nicht in eine Sättigung gelangt. Um den Messvorgang zyklisch zu wiederholen, kann der Kondensator vorzugsweise nach dem Aufladen während der Ladezeit auf ein vorgegebenes Anfangspotential entladen werden.

Der Messwert kann um einen vorgegebenen Faktor verstärkt werden, um die Differenz zwischen dem Messpotential und dem vorgegebenen Bezugspotential möglichst auf den gesamten Messbereich eines nachgeschalteten Messgerätes anzupassen.

Das Aufladen des Kondensators wird durchgeführt, indem der Ladevorgang gestartet wird und gemäß der Ladezeit beendet wird. Die Ladezeit hängt von einem Vergleichssignal ab, wobei das Vergleichssignal generiert wird, wenn das Potential im Kondensator das vorgegebene Bezugspotential übersteigt.

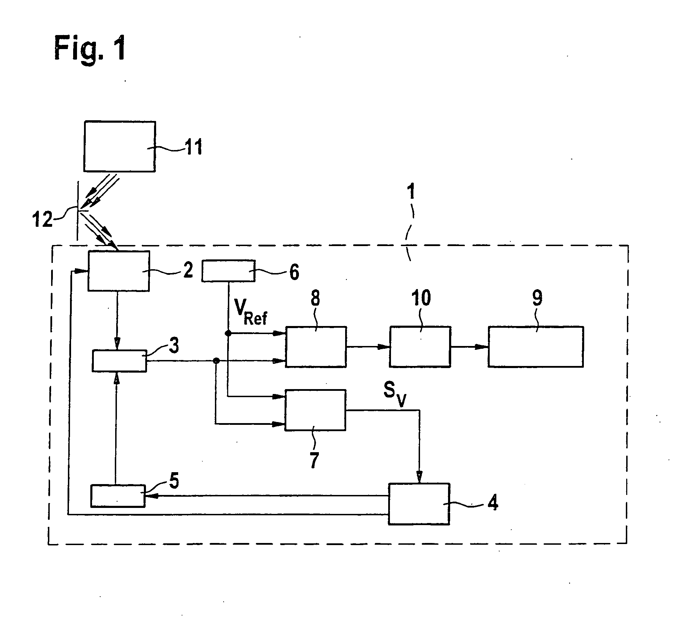

Eine bevorzugte Ausführungsform der Erfindung wird im Folgenden anhand der beigefügten Zeichnung näher erläutert.

Die einzige Figur zeigt eine Messeinheit 1 zur Verwendung in einem Feuchtigkeitssensor. Üblicherweise weisen Feuchtigkeitssensoren eine Strahlungssendeeinrichtung 11 zur Emission von Strahlung auf, die in Richtung einer Oberfläche eines lichtleitenden Mediums z. B. einer Windschutzscheibe 12 gerichtet ist. An der Oberfläche wird die emittierte Strahlung reflektiert und einer Strahlungsempfangseinrichtung 2 der Messeinheit 1 zugeführt. Befindet sich Feuchtigkeit oder Tröpfchen auf der Oberfläche, so wird ein Anteil der emittierten Strahlung nicht reflektiert, sondern in die Umgebung abgegeben. Dadurch wird der auf die Strahlungsempfangseinrichtung 2 reflektierte Anteil vermindert.

Die Strahlungsempfangseinrichtung 2 ist vorzugsweise als Fotodiode ausgeführt, die in Reihe mit einem Kondensator 3 an eine vorgegebene Versorgungsspannung $V_{CC}$ angelegt ist. Abhängig von dem empfangenen Strahlungsanteil fließt ein größerer oder ein kleiner Messstrom durch die Fotodiode und lädt den Kondensator 3 entsprechend dem Messstrom auf. Fließt ein größerer Messstrom so steigt die Spannung über dem Kondensator schneller, fließt ein kleinerer Messstrom, so steigt die Spannung über den Kondensator langsamer an.

Aufgrund unterschiedlicher optischer Parameter der Windschutzscheibe bzw. aufgrund verschiedener zu verwendender Strahlungssensoreinheiten (z. B. LED unterschiedlicher Stärke und/oder Empfindlichkeit) je nach Anwendung steigt die Kondensatorspannung mit unterschiedlicher Geschwindigkeit an. Bei einer gemäß der Vorgehensweise im Stand der Technik fest vorgegebenen Ladezeit kann es also dazu führen, dass der Kondensator entweder nur mit einer sehr geringen Spannung aufgeladen wird, oder dass der Kondensator bis in die Nähe der Versorgungsspannung aufgeladen wird.

Im Wesentlichen ist der Strom durch die Strahlungsempfangseinrichtung proportional zur empfangenen Strahlungsstärke. Dies gilt jedoch nur, wenn die Spannungsdifferenz über der als Fotodiode ausgebildeten Strahlungsempfangseinrichtung 2 ausreichend groß ist, da diese in ihrem Sättigungsbereich, d. h. unter Anliegen einer ausreichend großen Spannungsdifferenz, betrieben werden muss. Da die Strahlungsstärke bzw. der Bereich der Strahlungsstärke der reflektierten Strahlung nicht genau bekannt ist, muss ein Kalibriervorgang durchgeführt werden, bei dem die Größe der Kapazität des Kondensators 3 oder die Ladezeit, während der der Kondensator 3 aufgeladen wird, eingestellt werden.

Um dies zu vermeiden, ist erfindungsgemäß vorgesehen, dass der Kondensator 3 während einer durch eine Steuereinheit 4 bestimmten Ladezeit aufgeladen wird und anschließend auf ein Anfangspotential entladen wird. Die Steuereinheit 4 ist dazu mit einer Entladevorrichtung 5 verbunden, die den Kondensator kurzschließt, so dass dieser auf das Anfangspotential von z. B. 0 Volt zurückgeführt wird. Durch Ausschalten der Entladevorrichtung 5 mit Hilfe der Steuereinheit 4 beginnt der Ladevorgang von neuem, bei dem der durch die Strahlungsempfangseinheit 2 fließende Messstrom den Kondensator 3 auflädt.

Die Ladezeit bestimmt sich durch eine erste Aufladezeit, während der der Kondensator bis auf ein von einer Referenzspannungsquelle 6 vorgegebenes Referenzpotential $V_{REF}$ aufgeladen wird. Dies wird durch eine Vergleichereinrichtung 7 detektiert, die ein Vergleichssignal $S_V$ an die Steuereinheit 4 ausgibt. Das Vergleichssignal $S_V$ gibt der Steuereinheit 4 an, dass nun der erste Messvorgang während der ersten Aufladezeit beendet ist und nun das Aufladen des Kondensators 3 mit dem von der Strahlungsempfangseinheit 2 gelieferten Messstromes noch für eine vorbestimmte, von der ersten Aufladezeit abhängigen zweiten Aufladezeit durchgeführt wird.

Die zweite Aufladezeit ist so gewählt, dass die Strahlungsempfangseinrichtung 2 während des weiteren Aufladens des Kondensators nicht aus ihrer Sättigung, d. h. aus ihrem Arbeitspunkt gelangt, wenn sich der Kondensator 3 weiter auflädt. Vorzugsweise wird die zweite Aufladezeit so abhängig von der ersten Aufladezeit ausgewählt, dass eine Zuordnung gemäß einer vorgegebenen Tabelle erfolgt. Diese ist beispielsweise in der Steuereinheit 4 gespeichert. D. h. befindet sich die erste Aufladezeit in einem ersten Zeitbereich, so beträgt die zweite Aufladezeit eine erste Zeitdauer, befindet sich die erste Aufladezeit in einem zweiten Zeitbereich, so beträgt die zweite Aufladezeit eine zweite Zeitdauer usw. Auch andere Bestimmungsmöglichkeiten für die zweite Aufladezeit sind denkbar, z. B. gemäß einer Berechnungsformel. Es ist darauf zu achten, dass die gewählte zweite Aufladezeit nur so groß gewählt ist, dass während der gesamten Aufladezeit die Ladespannung des Kondensators nicht zu nahe an die Versorgungsspannung gelangt, so dass die Strahlungsempfangseinrichtung 2 nicht aus ihren Arbeitspunkt gelangt.

Die nach der Ladezeit des Kondensators 3 erreichte Ladespannung wird einem Subtrahierer 8 zugeführt, der die erreichte Ladespannung und die vorgegebene Referenzspannung $V_{REF}$ voneinander subtrahiert und die Differenzspannung als Messwert ausgibt. Der Subtrahierer hat die Funktion, lediglich den variablen Anteil des empfangenen Messstroms als Messwert auszugeben, und den Fixanteil des empfangenen Messstroms, d. h. den Fixanteil des reflektierten Strahlungsanteils zu eliminieren. Der Fixanteil des reflektierten Strahlungsanteils ergibt sich aus dem reflektierten Anteil der Strahlung bei einer vollständigen Benetzung der Oberfläche des Regensensors.

Um den Messwert an den Messbereich eines nachgeschalteten Messgerätes 9 anzupassen, kann ein Verstärker 10 vorgesehen sein, der die Spannung des Messwertes multipliziert. Das Messgerät 9 kann als analoger Digitalwandler oder als ein vergleichbares Messgerät ausgeführt sein.

Die Referenzspannung $V_{REF}$ ist vorzugsweise in einem Bereich zwischen 50% und 90% der Versorgungsspannung, insbesondere bei 75% der Versorgungsspannung gewählt. Liegt die Referenzspannung $V_{REF}$ bei 75% ist vorzugsweise die Verstärkung des Verstärkers 10 auf ein Verstärkungsfaktor von 4 anzusetzen. Ist die Referenzspannung $V_{REF}$ mit 80% der Versorgungsspannung gewählt, so wäre ein Verstärkungsfaktor von 5 anzusetzen, damit der Spannungsbereich von 0 Volt bis zur Versorgungsspannung abhängig von der empfangenen Strahlungsstärke dem Messgerät 9 zur Verfügung gestellt werden kann. Allgemein lässt sich die Beziehung zwischen der gewählten Referenzspannung $V_{REF}$ und dem vorzugsweise zu wählenden Verstärkungsfaktor des Verstärkers 10 wie folgt ausdrücken:

$$V_F = 1 : \left( \frac{1 - V_{REF}}{V_{CC}} \right),$$

wobei $V_F$ dem Verstärkungsfaktor, $V_{CC}$ der Versorgungsspannung entspricht.

Bezugszeichenliste

1 Messvorrichtung
2 Strahlungsempfangseinrichtung
3 Kondensator
4 Steuereinheit
5 Entladevorrichtung
6 Referenzspannungsquelle
7 Vergleichereinrichtung
8 Subtrahierer
9 Messgerät
10 Verstärker
11 Strahlungssendeeinrichtung
12 Windschutzscheibe

**Patentansprüche**

1. Messeinheit für einen Regensensor zum Detektieren von Feuchtigkeit auf einer Oberfläche (12) und zum Ausgeben eines Messwertes, mit einer Strahlungsempfangseinrichtung (2), um einen von dem Maß an Feuchtigkeit auf der Oberfläche abhängige Strahlung zu empfangen, und mit einer Messvorrichtung, die mit der Strahlungsempfangseinrichtung (2) verbunden ist und die einen Kondensator (3) aufweist, der mit einem von dem Anteil der reflektierten Strahlung abhängigen Messstrom aufladbar ist, wobei die Messvorrichtung eine Messsteuereinheit (4) aufweist, um den Kondensator (3) auf ein Messpotential während einer Ladezeit aufzuladen, wobei die Ladezeit von der Höhe des Messstroms abhängt, wobei der Messwert abhängig von der Ladespannung des Kondensators ist, **dadurch gekennzeichnet, dass** die Ladezeit die Summe einer ersten Aufladezeit, in der der Messstrom den Kondensator (3) auf ein vorgegebenes Bezugspotential ($V_{REF}$) auflädt, und einer zweiten Aufladezeit ist, die abhängig von der ersten Aufladezeit ist, wobei die Differenz zwischen dem Messpotential und dem vorgegebenen Bezugspotential ($V_{REF}$) als der Messwert ausgebbar ist.

2. Messeinheit nach Anspruch 1 **dadurch gekennzeichnet, daß** die Messvorrichtung so gestaltet ist, um nach dem Aufladen während der Ladezeit den Kondensator (3) auf ein vorgegebenes Anfangspotential zu entladen.

3. Messeinheit nach Anspruch 1 oder 2, **dadurch gekennzeichnet, dass** die Messvorrichtung einen Messwertverstärker (10) aufweist, um den Messwert um einen vorgegebenen Faktor zu verstärken.

**4.** Messeinheit nach einem der Ansprüche 1 bis 3, **dadurch gekennzeichnet, daß** die Messvorrichtung eine Vergleichereinrichtung (7) und eine Steuereinheit (4) aufweist, um den Ladevorgang zu starten und gemäß der Ladezeit zu beenden, wobei die Ladezeit abhängig von einem von der Vergleichereinrichtung (7) generierten Vergleichssignal ($S_v$) bestimmt, wobei das Vergleichssignal ($S_v$) das Ende der ersten Aufladezeit angibt.

**5.** Messeinheit nach einem der Ansprüche 1 bis 4, **dadurch gekennzeichnet, daß** das vorgegebene Bezugspotential ($V_{REF}$) zwischen 50 % und 90%, insbesondere bei 75% eines Versorgungspotentials liegt.

**6.** Feuchtigkeitssensor mit einer Messeinheit nach einem der vorangehenden Ansprüche und einer Strahlungssendeeinrichtung (11), um eine Strahlung auf eine Oberfläche zu emittieren.

**7.** Feuchtigkeitssensor nach Anspruch 6, **dadurch gekennzeichnet, daß** die empfangene Strahlung einen Anteil einer an der Oberfläche reflektierten Strahlung entspricht.

**8.** Verfahren zum Messen des Maßes an Feuchtigkeit auf einer Oberfläche und zum Generieren eines Messwertes,
wobei eine Strahlung auf eine Oberfläche emittiert wird,
wobei ein von dem Maß an Feuchtigkeit auf der Oberfläche abhängigen Anteil der an der Oberfläche reflektierten Strahlung empfangen wird,
wobei ein Kondensator (3) mit einem von dem Anteil der reflektierten Strahlung abhängigen Messstrom während einer Ladezeit aufgeladen wird, **dadurch gekennzeichnet, daß** die Ladezeit abhängig von der Höhe des Messstromes gewählt wird, wobei der Messwert von der Ladespannung des Kondensators abhängt,
wobei die Summe einer ersten Aufladezeit, in der der Messstrom den Kondensator (3) auf ein vorgegebenes Bezugspotential ($V_{REF}$) auflädt, und einer zweiten Aufladezeit ist, die abhängig von der ersten Aufladezeit ist,
wobei die Differenz zwischen dem Messpotential und dem vorgegebenen Bezugspotential als der Messwert ausgegeben wird.

**9.** Verfahren nach Anspruch 8, **dadurch gekennzeichnet daß** der Kondensator (3) nach dem Aufladen während der Ladezeit auf ein vorgegebenes Anfangspotential entladen wird.

**10.** Verfahren nach Anspruch 8 oder 9, **dadurch gekennzeichnet, daß** der Messwert um einen vorgegebenen Faktor verstärkt wird.

**11.** Verfahren nach einem der Ansprüche 8 bis 10, **dadurch gekennzeichnet, daß** der Ladevorgang gestartet wird und gemäß der Ladezeit beendet wird, wobei die Ladezeit abhängig von einem Vergleichssignal ($S_V$) ist, wobei das Vergleichssignal ($S_V$) generiert wird, wenn das Potential im Kondensator (3) das vorgegebene Bezugspotential ($V_{REF}$) übersteigt.

## Claims

**1.** Measurement unit for a rain sensor for detecting moisture on a surface (12) and for outputting a measured value, comprising a radiation-receiving device (2), in order to receive radiation which is dependent on the amount of moisture on the surface, and comprising a measurement apparatus which is connected to the radiation-receiving device (2) and which has a capacitor (3) which can be charged with a measurement current which is dependent on the proportion of the reflected radiation, with the measurement apparatus having a measurement control unit (4) in order to charge the capacitor (3) to a measurement potential during a charge time, with the charge time depending on the magnitude of the measurement current, with the measured value depending on the charge voltage of the capacitor, **characterized in that** the charge time is the sum of a first charging time, in which the measurement current charges the capacitor (3) to a predefined reference potential ($V_{REF}$), and a second charging time which is dependent on the first charging time, it being possible to output the difference between the measurement potential and the predefined reference potential ($V_{REF}$) as the measured value.

**2.** Measurement unit according to Claim 1, **characterized in that** the measurement apparatus is designed to discharge the capacitor (3) to a predefined starting potential following charging during the charge time.

**3.** Measurement unit according to Claim 1 or 2, **characterized in that** the measurement apparatus has a measured value amplifier (10) in order to amplify the measured value by a predefined factor.

**4.** Measurement unit according to one of Claims 1 to 3, **characterized in that** the measurement apparatus has a comparator device (7) and a control unit (4) in order to start the charging process and end the said charging process in accordance with the charge time, with the charge time being determined depending on a comparison signal ($S_v$) which is generated by the comparator device (7), with the comparison

signal ($S_v$) indicating the end of the first charging time.

5. Measurement unit according to one of Claims 1 to 4, **characterized in that** the predefined reference potential ($V_{REF}$) is between 50% and 90%, in particular is 75%, of a supply potential.

6. Moisture sensor comprising a measurement unit according to one of the preceding claims and a radiation-transmitting device (11) in order to emit radiation to a surface.

7. Moisture sensor according to Claim 6, **characterized in that** the received radiation corresponds to a proportion of the radiation which is reflected at the surface.

8. Method for measuring the amount of moisture on a surface and for generating a measured value, with radiation being emitted to a surface, with a proportion, which is dependent on the amount of moisture on the surface, of the radiation which is reflected at the surface being received, with a capacitor (3) being charged with a measurement current, which is dependent on the proportion of the reflected radiation, during a charge time, **characterized in that** the charge time is selected depending on the magnitude of the measurement current, with the measured value depending on the charge voltage of the capacitor, with the charge time being the sum of a first charging time, in which the measurement current charges the capacitor (3) to a predefined reference potential ($V_{REF}$), and a second charging time which is dependent on the first charging time, with the difference between the measurement potential and the predefined reference potential being output as the measured value.

9. Method according to Claim 8, **characterized in that** the capacitor (3) is discharged to a predefined starting potential following charging during the charge time.

10. Method according to Claim 8 or 9, **characterized in that** the measured value is amplified by a predefined factor.

11. Method according to one of Claims 8 to 10, **characterized in that** the charging process is started and is ended in accordance with the charge time, with the charge time depending on a comparison signal ($S_V$), with the comparison signal ($S_V$) being generated when the potential in the capacitor (3) exceeds the predefined reference potential ($V_{REF}$)

## Revendications

1. Unité de mesure pour un capteur de pluie pour détecter l'humidité sur une surface (12) et fournir une valeur de mesure, comprenant un récepteur de rayonnement (2) pour recevoir un rayonnement dont la mesure dépend de l'humidité de la surface et un dispositif de mesure relié au récepteur de rayonnement (22) et ayant un condensateur (3) chargé par un courant de mesure dépendant de la composante de rayonnement réfléchi,
le dispositif de mesure ayant une unité de commande de mesure (4) pour charger le condensateur (3) à un potentiel de mesure pendant une durée de charge,
la durée de charge dépend de l'intensité du courant de mesure,
la valeur de mesure dépend de la tension de charge du condensateur,
**caractérisée en ce que**
la durée de charge est la somme d'une première durée de charge au cours de laquelle le courant de mesure charge le condensateur (3) à un potentiel de référence ($V_{REF}$) prédéfini et d'une seconde durée de charge dépendant de la première durée de charge,
la différence entre le potentiel de mesure et le potentiel de référence prédéfinis ($V_{REF}$) étant fournie comme valeur de mesure.

2. Unité de mesure selon la revendication 1, **caractérisée en ce que**
le dispositif de mesure est conçu pour qu'après la charge, pendant la durée de charge du condensateur (3), il se décharge à un potentiel initial prédéfini.

3. Unité de mesure selon la revendication 1 ou 2, **caractérisé en ce que**
le dispositif de mesure comporte un amplificateur de valeur de mesure (10) pour amplifier la valeur de mesure d'un coefficient prédéfini.

4. Unité de mesure selon l'une des revendications 1 à 3, **caractérisée en ce que**
le dispositif de mesure comporte un comparateur (7) et une unité de commande (4) pour démarrer l'opération de charge et la terminer selon la durée de charge, la durée de charge étant définie en fonction d'un signal de comparaison ($S_V$) généré par l'installation de comparaison (7), le signal de comparaison ($S_V$) indiquant la fin de la première durée de charge.

5. Unité de mesure selon l'une des revendications 1 à 4, **caractérisée en ce que**
le potentiel de référence prédéfini ($V_{REF}$) est compris entre 50 % et 90 %, notamment il se situe à 75 % d'un potentiel d'alimentation.

**6.** Capteur d'humidité comportant une unité de mesure selon l'une des revendications précédentes, et un émetteur de rayonnement (11) pour émettre un rayonnement vers une surface.

**7.** Capteur d'humidité selon la revendication 6, **caractérisé en ce que** le rayonnement reçu correspond à une fraction du rayonnement réfléchi à la surface.

**8.** Procédé de mesure de l'humidité sur une surface et pour générer une valeur de mesure, selon lequel on émet un rayonnement vers la surface, on reçoit une partie du rayonnement réfléchi par la surface et qui dépend du degré d'humidité à la surface, on charge un condensateur (3) pendant une durée de charge avec le courant de mesure dépendant de la fraction de rayonnement réfléchie, **caractérisé en ce qu'** on choisit la durée de charge en fonction de l'intensité du courant de mesure, la valeur de mesure dépend de la tension de charge du condensateur, on fournit la somme d'une première durée de charge au cours de laquelle le condensateur (3) se charge avec le courant de mesure à un potentiel de référence prédéfini ($V_{REF}$) et d'une seconde durée de charge qui dépend de la première durée de charge, on fournit la différence entre le potentiel de mesure et le potentiel de référence prédéfini comme valeur de mesure.

**9.** Procédé selon la revendication 8, **caractérisé en ce que** le condensateur (3) après la charge est déchargé pendant la durée de charge à un potentiel initial prédéfini.

**10.** Procédé selon la revendication 8 ou 9, **caractérisé en ce que** la valeur de mesure est amplifiée selon un coefficient prédéfini.

**11.** Procédé selon l'une des revendications 8 à 10, **caractérisé en ce qu'** on démarre l'opération de charge et on la termine selon la durée de charge, la durée de charge dépendant d'un signal de comparaison (Sv), le signal de comparaison ($S_V$) étant généré lorsque le potentiel du condensateur (3) dépasse un potentiel de référence prédéfini ($V_{REF}$).

EP 1 526 048 B1

**Fig. 1**

9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9855347 A
- DE 19603553 C1